# EUROPEAN PATENT APPLICATION

(11) **EP 4 789 550 A1**
(43) Date of publication of application: **12.08.2026**
(21) Application number: 24874403.9
(22) Date of filing: 29.08.2024
(51) Int. Cl.: A23L 23/10

(54) **SOLID ROUX AND METHOD FOR PRODUCING SAME**

(30) Priority: 02.10.2023 JP 2023171029
(71) Applicant: NISSIN FOODS HOLDINGS CO., LTD., Yodogawa-ku Osaka-shi, Osaka 532-8524 (JP)
(72) Inventor: MATSUYAMA, Shingo, Osaka-shi Osaka 532-8524 (JP); SAEKI, Kentaro, Osaka-shi Osaka 532-8524 (JP); IIDA, Yukichika, Osaka-shi Osaka 532-8524 (JP); KOMATSU, Masashi, Osaka-shi Osaka 532-8524 (JP)
(74) Representative: Mewburn Ellis LLP
(86) International application number: PCT/JP2024/030904
(87) International publication number: WO 2025/074789

(57) **Abstract**

[Problem]

An object is to provide a solid roux in which the amount of saturated fatty acids is reduced and polyunsaturated fatty acids are used in place of saturated fatty acids.

[Solution]

A method for producing a solid roux, including a step of mixing raw materials being spices, a liquid oil rich in polyunsaturated fatty acids, and a liquid-oil solidifying agent; a step of subjecting the mixture to rolling processing; a step of subjecting the rolling-processed mixture to conching; and a step of filling the conched mixture into a mold. A solid roux, in which a proportion of polyunsaturated fatty acids per 100 g is 5.0% or more.

## Description

### TECHNICAL FIELD

The present invention relates to a solid roux and a method for producing the same. More specifically, the present invention relates to a solid roux containing a small amount of saturated fatty acids, and a method for producing the same.

### BACKGROUND ART

According to the Dietary Reference Intakes for Japanese (2020 edition) published by the Ministry of Health, Labour and Welfare, the daily tentative dietary goal for preventing life-style related diseases (upper limit) of lipids (fat energy ratio) is set at 20 to 30% of the energy intake for both men and women.

Lipids are classified according to the type of fatty acids and are divided into two types: saturated fatty acids and unsaturated fatty acids. Unsaturated fatty acids are divided into monounsaturated fatty acids and polyunsaturated fatty acids. Polyunsaturated fatty acids are further divided into n-3 fatty acids (omega-3 fatty acids) and n-6 fatty acids (omega-6 fatty acids), depending on the ordinal position of the double bond counted from the methyl terminus of the hydrocarbon chain.

Saturated fatty acids are contained in high amounts in animal fats such as dairy products and meat, as well as in vegetable fats and oils such as palm oil.

Monounsaturated fatty acids are contained in high amounts in animal fats and in vegetable oils such as olive oil, and the majority thereof is oleic acid. Monounsaturated fatty acids can be synthesized in the body from saturated fatty acids in addition to being ingested from foods. Therefore, they are not essential fatty acids, and no adequate intake (lower limit) or tentative dietary goal for preventing life-style related diseases (upper limit) is established in the Dietary Reference Intakes.

The n-3 fatty acids include α-linolenic acid, eicosapentaenoic acid (EPA), and docosahexaenoic acid (DHA). The main dietary source of α-linolenic acid is vegetable oils, whereas the main dietary sources of EPA and DHA are fish and shellfish. The n-3 fatty acids are essential fatty acids because they cannot be synthesized in the body.

The n-6 fatty acids include linoleic acid, γ-linolenic acid, and arachidonic acid. 98% of the n-6 fatty acids ingested by Japanese individuals from foods is linoleic acid, and vegetable oils such as soybean oil and corn oil are the main dietary sources thereof. The n-6 fatty acids are essential fatty acids because they cannot be synthesized in the body.

In recent years, due to changes in dietary habits, results have shown that the proportion of individuals whose daily intake of lipids (fat energy ratio) exceeds the tentative dietary goal for preventing life-style related diseases of 30% is approximately 35.0% among men aged 20 years or older and approximately 44.4% among women aged 20 years or older (National Health and Nutrition Survey (2019)). In addition, when viewed in terms of recent annual trends, the proportion of individuals with an intake of lipids (fat energy ratio) of 30% or more has been increasing for both men and women. When viewed in terms of fatty acids, the intake of saturated fatty acids is increasing.

According to the Dietary Reference Intakes for Japanese (2020 edition), the tentative dietary goal for preventing life-style related diseases of saturated fatty acids for men and women aged 18 years or older is set at 7% or less of total energy intake, whereas calculations based on the results of the National Health and Nutrition Survey (2019) show that the average intake of saturated fatty acids among Japanese individuals aged 20 years or older corresponds to 8.4% of total energy intake. Excessive intake of saturated fatty acids is expected to increase total blood cholesterol levels and thereby increase the risk of cardiovascular diseases, including myocardial infarction. On the other hand, polyunsaturated fatty acids are known to act to lower triglyceride levels, prevent the formation of blood clots, and prevent arteriosclerosis. Therefore, an adequate intake (lower limit) has been established for polyunsaturated fatty acids.

Accordingly, in recent years, foods in which saturated fatty acids are replaced with unsaturated fatty acids have been proposed. Unsaturated fatty acids are often in liquid form, and therefore replacing saturated fatty acids with unsaturated fatty acids is relatively easy in liquid or paste-like foods. However, in the case of a solid roux such as curry or stew, solidification is achieved by saturated fatty acids, and therefore a problem arises in that the greater the amount of unsaturated fatty acids used for replacement, the more difficult solidification becomes. To address this, Patent Literature 1 discloses a fats-and-oils composition for solid roux intended to reduce the contents of trans fatty acids and saturated fatty acids.

### CITATION LIST

### PATENT LITERATURE

[Patent Literature 1] International Publication No. WO 2016/143530

### SUMMARY OF INVENTION

### TECHNICAL PROBLEM

However, although the fats-and-oils composition of Patent Literature 1 can reduce the contents of trans fatty acids and saturated fatty acids, it does not supplement polyunsaturated fatty acids, which are essential nutrients.

The present invention has been made in view of the above problem. That is, an object of the present invention is to provide a solid roux in which the amount of saturated fatty acids is reduced and polyunsaturated fatty acids are used in place of saturated fatty acids.

### SOLUTION TO PROBLEM

To solve the above problem, the present invention is characterized in that the proportion of saturated fatty acids per 100 g is less than 15%.

In this configuration, the proportion of polyunsaturated fatty acids per 100 g is preferably 5.0% or more. In addition, the solid roux is preferably for cooking with hot water.

To solve the above problem, the present invention is characterized as being a method for producing a solid roux, comprising a step of mixing raw materials being spices, a liquid oil rich in polyunsaturated fatty acids, and a liquid-oil solidifying agent; a step of subjecting the mixture to rolling processing; a step of subjecting the rolling-processed mixture to conching; and a step of filling the conched mixture into a mold.

### ADVANTAGEOUS EFFECTS OF INVENTION

According to the present invention, it is possible to obtain a solid roux in which the content of polyunsaturated fatty acids, which are essential nutrients, is increased and the amount of saturated fatty acids is reduced. As a result, excessive intake of saturated fatty acids can be suppressed, thereby contributing to health promotion.

### DESCRIPTION OF EMBODIMENTS

Hereinafter, preferred embodiments for carrying out the present invention will be described. It should be noted that the embodiments described below illustrate one example of representative embodiments of the present invention, and the scope of the present invention is not to be construed as being limited thereby.

### <Solid Roux>

The solid roux of the present invention is obtained by heating and mixing raw materials containing fats and oils and solid components, followed by solidification. By heating the roux together with ingredients such as meat and vegetables in water, a dish having a thickened soup can be easily prepared. In the present invention, the roux is preferably one that retains its shape after pouring hot water unless an external force is applied. It should be noted that, in the present specification, the term "solid components" refers to the components constituting the solid roux excluding fats and oils and water.

### <Fats and Oils>

The solid roux is produced by heating and mixing raw materials containing fats and oils and solid components. As fats and oils usable in the production of the solid roux, conventionally known fats and oils can be used, as long as the amounts of saturated fatty acids and unsaturated fatty acids fall within predetermined ranges. For example, any of natural fats and oils, processed fats and oils, vegetable fats and oils, and mixtures thereof can be used.

Examples of fats and oils containing saturated fatty acids include butter, margarine, lard, and beef tallow. The amount of saturated fatty acids used in the present invention is preferably less than 15% per 100 g of the final product, i.e., the solid roux, more preferably less than 12%, and even more preferably less than 10%.

The unsaturated fatty acid may be a monounsaturated fatty acid or a polyunsaturated fatty acid, but is more preferably a polyunsaturated fatty acid. Examples of fats and oils containing monounsaturated fatty acids include olive oil, sunflower oil, and rice bran oil. The amount of monounsaturated fatty acids used in the present invention is not particularly limited, but it is preferably 5% or more per 100 g of the final product, i.e., the solid roux, more preferably 8% or more, and even more preferably 10% or more.

Examples of ingredients rich in polyunsaturated fatty acids include, for n-3 fatty acids, fish such as blue-backed fish, perilla oil, flaxseed oil, and nuts such as walnuts. Examples for n-6 fatty acids include corn oil, soybean oil, and sesame oil. The amount of polyunsaturated fatty acids used in the present invention is not particularly limited, but it is preferably 5.0% or more per 100 g of the final product, i.e., the solid roux.

In the present invention, it is preferable to use a liquid-oil solidifying agent. Examples of the liquid-oil solidifying agent include polyglycerol fatty acid esters, and those having a low content of saturated fatty acids are preferable.

### <Solid Components>

Solid components refer to the portion of the solid roux excluding fats and oils and water. The content of solid components relative to the entire solid roux is determined by {(the mass of the solid roux - the content of fats and oils and water in the solid roux) / the mass of the solid roux}. In this case, the content of fats and oils and water in the solid roux can be determined, for example, based on the lipid percentage indicated on the packaging container of the solid roux and the water percentage of the solid roux as analyzed.

### <Wheat Flour>

The solid roux of the present invention may contain wheat flour. As the wheat flour, generally, at least one selected from the group consisting of all-purpose flour, strong flour, semi-strong flour, and soft flour can be used. In addition, as a raw material other than wheat flour, a portion of the wheat flour may be replaced with a starchy raw material. When fats and oils are contained, adding a starchy raw material facilitates the dispersion of other solid materials in the fats and oils melted during the production of the solid roux, thereby making it easier for the fats and oils and the other solid materials to become integrated. In addition, by incorporating a starchy raw material, it becomes easier to adjust the flavor and texture of the resulting food product.

The amount of wheat flour used in the solid roux of the present invention is preferably 10 mass% or more and 35 mass% or less, and more preferably 15 mass% or more and 31 mass% or less. By setting the amount of wheat flour used within the above range, the viscosity of a cooked product using the solid roux can be adjusted to fall within a suitable range. It should be noted that the viscosity of a cooked product using the solid roux (viscosity measured at 60°C using a B-type viscometer) is preferably 500 mPa·s or more and 5,000 mPa·s or less, and more preferably 1,000 mPa·s or more and 3,000 mPa·s or less.

### <Starchy Raw Material>

The starchy raw material is not particularly limited as long as it enables the production of the solid roux, and examples thereof include wheat starch, corn starch, rice starch, potato starch, sweet potato starch, tapioca starch, kudzu starch, and modified starches. The content of the starchy raw material in the solid roux is not particularly limited, but is, for example, 0 to 5 mass%, preferably 0 to 3 mass%, and more preferably 0 to 2 mass%.

In addition, the solid roux of the present invention may contain a polysaccharide thickener. The term "polysaccharide thickener" refers to a polysaccharide that exhibits viscosity or undergoes gelation when dissolved in water. By using a polysaccharide thickener, the viscosity of a soup obtained using the solid roux can be adjusted. The polysaccharide thickener that can be used in the present invention is not particularly limited, as long as it is edible. Examples thereof include xanthan gum, welan gum, guar gum, tamarind seed gum, gellan gum, carrageenan, and locust bean gum. These may be used alone or in combination. The content of the polysaccharide thickener is not particularly limited, but is, for example, preferably 0.5 to 5.0 mass%, more preferably 1.0 to 5.0 mass%, and even more preferably 1.0 to 3.0 mass%.

### <Seasoning Raw Material>

The solid roux of the present invention may further contain a seasoning raw material. Examples of seasoning raw materials include salt, powdered milk, spices, vegetable powders such as onion powder, other powders, and paste-like vegetable-derived raw materials (e.g., tomato paste, potato paste, apple paste, onion paste, pumpkin paste, and broccoli paste). The amount of these seasoning raw materials to be added can be appropriately set by a person skilled in the art.

### <Spices>

The spices, which are seasoning raw materials, may be used as a single spice or as a mixture of a plurality of spices. Examples of spices used for mixing include cardamom, clove, nutmeg, fenugreek, bay leaf, fennel, coriander, cumin, caraway, thyme, sage, dried citrus peel, pepper, chili pepper, mustard, ginger, turmeric, and paprika. In addition, a curry spice in which a plurality of spices are pre-mixed may be used.

### <Flavor>

The solid roux of the present invention may contain a flavor. The content of the flavor is preferably 0.1 to 2.0 mass%, more preferably 0.1 to 1.5 mass%, and even more preferably 0.3 to 1.5 mass% or less. It should be noted that, when fats and oils are used as a solvent for the flavor, the amounts of saturated fatty acids and/or unsaturated fatty acids described above are values that include the fats and oils used in the flavor.

In the present invention, existing vitamins and the like may further be contained. The content of the vitamins is not particularly limited, but is, for example, preferably 5 to 15 mass%, and more preferably 5 to 10 mass%.

### <Others>

The solid roux of the present invention may contain sugar, salt, amino acids (seasonings), vegetable powders, and the like.

### <Method for Producing Solid Roux>

The solid roux of the present invention can be produced by an ordinary method using the above raw materials. For example, the solid roux can be produced by heating and mixing raw materials containing fats and oils and solid components, followed by cooling and solidification at a temperature below the melting point of the fats and oils. In the present invention, it is preferable to perform cooling and solidification after adding a liquid-oil solidifying agent. For industrial production, a continuous production line or the like may be employed.

In the present invention, it is preferable to further add rolling processing and conching to the ordinary method.

The term "rolling processing" refers to a method in which raw materials are passed narrow space between rolls arranged with their roll axes parallel to each other. By performing rolling processing, the grain size of the raw materials becomes finer and more uniform, thereby improving palatability. In addition, the roux is more easily solidified and demolded. In the present invention, it is preferable to perform rolling processing such that the average grain size of the raw materials after the rolling processing is 10 µm to 150 µm, more preferably 10 µm to 100 µm. In addition, the number of times rolling processing is performed is not particularly limited. It should be noted that, instead of rolling processing, pressing using a press, a grinding machine, or the like, or a shearing treatment using a cutter mixer or the like, may be performed. In the present invention, it is preferable to perform this after mixing the raw materials.

The term "conching" refers to a processing method of kneading for a long period of time under strong force using a stirrer. By performing conching, a smoother texture is obtained. In addition, the conched raw materials allow the fats and oils and the solid components to be well mixed and to be in a very smooth state, thereby providing excellent suitability for filling and further facilitating demolding. As the conching conditions, it is desirable to perform stirring for about 30 minutes to 4 hours while allowing the product temperature to reach 70 to 90°C. Alternatively, it is desirable to perform conching until the raw materials after conching attain a degree of fluidity that allows filling with a depositor. In the present invention, it is preferable to perform conching after the rolling processing.

### EXAMPLES

Next, the present invention will be described in more detail with reference to Examples and the like. It should be noted that the Examples are merely illustrative, and the scope of the present invention is not limited in any way by these Examples.

### (Test Example 1)

As powdered materials, 3% by weight of roasted wheat flour, 27% by weight of collagen peptides, 10% by weight of nutrients such as vitamins, 7% by weight of curry spices, and 22% by weight of seasonings such as sugar were prepared; and as oils, 3% by weight of flaxseed oil, 9% by weight of grapeseed oil, 13% by weight of rice bran oil, 1% by weight of flavors, and 4% by weight of a liquid-oil solidifying agent were prepared. First, the powdered materials and the oils were each thoroughly mixed separately. The entire amount of the powder mixture and 80% of the oil mixture were added to a mixer and thoroughly mixed. The mixture of the powdered materials and the oils was subjected to the rolling processing. The rolling-processed mixture was subjected to conching for 1 hour to allow the product temperature to reach 70°C. The remaining 20% of the oil mixture set aside earlier was heated to 80°C, and the liquid-oil solidifying agent was added and dissolved therein. The oil mixture containing the liquid-oil solidifying agent was added to the conched material and thoroughly mixed. The obtained mixture was filled into molds in amounts of 42 g each and cooled at -9°C for 45 minutes. After cooling, the final product, i.e., the solid roux, was obtained by removing it from the molds. At this time, the proportion of saturated fatty acids was 6.1%, and the proportion of unsaturated fatty acids was 20.5% (of which monounsaturated fatty acids accounted for 8.0% and polyunsaturated fatty acids accounted for 12.5%).

### (Test Example 2)

Except that, as powdered materials, 4% by weight of roasted wheat flour, 30% by weight of collagen peptides, 12% by weight of nutrients such as vitamins, 8% by weight of curry spices, and 25% by weight of seasonings such as sugar were used; and as oils, 20% by weight of rapeseed oil and 2% by weight of a liquid-oil solidifying agent were used, the procedure was the same as in Test Example 1. At this time, the proportion of saturated fatty acids was 3.1%, and the proportion of unsaturated fatty acids was 17.1% (of which monounsaturated fatty acids accounted for 11.6% and polyunsaturated fatty acids accounted for 5.5%).

### (Test Example 3)

Except that, as powdered materials, 4% by weight of roasted wheat flour, 29% by weight of collagen peptides, 11% by weight of nutrients such as vitamins, 8% by weight of curry spices, and 25% by weight of seasonings such as sugar were used; and as oils, 22% by weight of rapeseed oil and 2% by weight of a liquid-oil solidifying agent were used, the procedure was the same as in Test Example 1. At this time, the proportion of saturated fatty acids was 3.4%, and the proportion of unsaturated fatty acids was 17.3% (of which monounsaturated fatty acids accounted for 11.3% and polyunsaturated fatty acids accounted for 6.0%).

### (Test Example 4)

Except that, as powdered materials, 2% by weight of roasted wheat flour, 19% by weight of collagen peptides, 8% by weight of nutrients such as vitamins, 5% by weight of curry spices, and 16% by weight of seasonings such as sugar were used; and as oils, 25% by weight of flaxseed oil, 5% by weight of grapeseed oil, 15% by weight of rice bran oil, and 4% by weight of a liquid-oil solidifying agent were used, the procedure was the same as in Test Example 1. At this time, the proportion of saturated fatty acids was 10.0%, and the proportion of unsaturated fatty acids was 28.5% (of which monounsaturated fatty acids accounted for 7.7% and polyunsaturated fatty acids accounted for 20.8%).

### (Test Example 5)

Except that the rolling processing was not performed, the procedure was the same as in Test Example 1.

### (Test Example 6)

Except that conching was not performed, the procedure was the same as in Test Example 1.

### (Test Example 7)

Except that a liquid-oil solidifying agent was not added, the procedure was the same as in Test Example 1. At this time, the proportion of saturated fatty acids was 4.2%, and the proportion of unsaturated fatty acids was 28.5% (of which monounsaturated fatty acids accounted for 7.7% and polyunsaturated fatty acids accounted for 20.8%).

For Test Examples 1 to 7, evaluations were conducted for suitability for filling, ease of demolding, hardness of the solid roux, and comprehensive evaluation based on the evaluation criteria described below. The results are shown in Table 1.

### <Evaluation of Suitability for Filling>

Evaluation criteria (△ and × indicate no suitability for production)
○: Fillable without problems
△: Low fluidity, requiring a long time for filling
×: No fluidity; not fillable

### <Evaluation of Ease of Demolding>

Evaluation criteria (3 or less indicate no suitability for production)
5: The solid roux can be removed from the mold without any residue remaining in the mold
4: The roux can be removed from the mold, although a slight film from the surface of the roux may remain on the mold
3: The roux can be removed from the mold, but a portion of the roux remains in the mold
2: The roux can be removed from the mold, but most of the roux remains in the mold
1: The roux does not release from the mold and cannot be removed at all

### <Hardness of Solid Roux>

Evaluation criteria (△ and × indicate no suitability in terms of physical properties)
○: The roux does not lose its shape even when vibration or shock is applied
△: The roux loses its shape when a strong shock is applied
×: The roux cannot retain its shape

### <Comprehensive Evaluation>

○: Can be used as a product
×: Cannot be used as a product

**[Table 1]**

| | Suitability for Filling | Ease of Demolding | Hardness of Solid Roux | Comprehensive Evaluation |
|---|---|---|---|---|
| Test Example 1 | ○ | 5 | ○ | ○ |
| Test Example 2 | Δ | 3 | Δ | × |
| Test Example 3 | ○ | 4 | ○ | ○ |
| Test Example 4 | ○ | 5 | ○ | ○ |
| Test Example 5 | × | 3 | × | × |
| Test Example 6 | Δ | 3 | Δ | × |
| Test Example 7 | ○ | 4 | × | × |

When Test Examples 1 to 4, which were produced under the same conditions, were compared, Test Examples 1, 3, and 4 were evaluated as having suitability for production in all evaluation items. In contrast, Test Example 2 was evaluated as having no suitability for production.

Next, when comparing Test Example 2 and Test Example 3, it can be seen that Test Example 2 has a smaller overall amount of fats and oils than Test Example 3. In particular, it can be seen that the amount of saturated fatty acids, which easily solidify, is small. This suggests that, in the production of a solid roux using unsaturated fatty acids, it is preferable that saturated fatty acids be contained in an amount greater than 3.1%.

When comparing Test Examples 1, 3, and 4, it can be seen that Test Example 3 has a slightly inferior evaluation in terms of ease of demolding compared with the other Test Examples. When Test Examples 1, 3, and 4 are examined, it can be seen that the amounts of saturated fatty acids and unsaturated fatty acids increase in the order of Test Examples 3, 1, and 4. Therefore, it is estimated that the slightly inferior evaluation of ease of demolding in Test Example 3 is attributable to the amount of fatty acids.

Next, Test Examples 1, 5, 6, and 7 are compared. Test Examples 5, 6, and 7 are test examples in which one of rolling processing, conching, or the liquid-oil solidifying agent was not used in the production method. As is also clear from the results of Test Examples 5, 6, and 7, solid roux in which one of the processes or material was not used did not satisfy suitability for production and was not fit for use as a product. When examined individually, it can be seen that all evaluation items received the lowest evaluation in the present tests when the rolling processing was not performed. This is thought to be because variation in grain size of the raw materials prevents uniform mixing of the raw materials. As a result of the raw materials not being uniformly mixed, fluidity deteriorates, and variation in density occurs in the final product, i.e., the solid roux. Thus, the variation in density is thought to have caused the product to become brittle and unable to retain its shape. This indicates that the rolling processing is an essential process step in the production of a solid roux using unsaturated fatty acids.

Next, the case in which conching was not performed is examined. Because the raw materials were uniformly mixed by the rolling processing, suitability for filling and the hardness of the solid roux were improved compared with Test Example 5. However, even so, it did not satisfy suitability for production and was not fit for use as a product. In addition, although the raw materials were mixed by the rolling processing, the roux was in a chalky state and therefore was brittle and difficult to demold. This indicates that conching is an essential process step for converting the mixture of raw materials from a chalky state to a smooth liquid state.

Finally, when a liquid-oil solidifying agent was not used, the unsaturated fatty acids remained as a liquid oil, and therefore the mixture of raw materials was in a smooth liquid state after rolling processing and conching. Therefore, with respect to suitability for filling, it satisfied suitability for production. In addition, because the mixture of raw materials was filled in a uniform and smooth state, there was no variation in density within the final product, i.e., the solid roux, and the ease of demolding was favorable. However, because no liquid-oil solidifying agent was used, the solid roux was soft, making it difficult to retain its shape. Therefore, it was not fit for use as a product.

### <Application to Food Products for Cooking with Hot Water>

Next, whether the solid roux according to the present Example could be used as a product was examined using an instant food product for cooking with hot water that employed puffed dried rice. Specifically, one piece of the solid roux described in Test Example 1, 72 g of puffed dried rice composed of a predetermined amount of short-grain rice, and 8 g of dried ingredients were placed into a container. Here, the inside diameter of the opening of the container was 100 mm, the inside diameter of the underside was 75 mm, and the height from the underside to the opening of the container was 95 mm. In addition, the average major axis of the puffed dried rice was 7 to 8 mm, and the puffing degree was 0.47 g/mL. To the instant food product, 200 mL of hot water at 95°C was added, and after allowing it to stand for 5 minutes, the mixture was stirred with a spoon for 30 seconds at a speed of 90 rotations per minute. After stirring, the contents were transferred onto a tray, and it was visually confirmed whether there was any undissolved solid roux remaining. In addition, a comparison of the flavor was conducted with a commercially available Curry Meshi (manufactured by Nissin Food Products Co., Ltd.).

As a result of the examination, no undissolved solid roux was observed, and the solid roux was dissolved and uniformly mixed. In addition, the flavor was comparable to that of a commercially available product, with no noticeable difference.

## Claims

1. A solid roux, wherein a proportion of saturated fatty acids per 100 g is less than 15%.

2. A solid roux, wherein a proportion of polyunsaturated fatty acids per 100 g is 5.0% or more.

3. The solid roux according to claim 1 or 2, wherein the solid roux is for cooking with hot water.

4. A method for producing a solid roux, comprising:
a step of mixing raw materials being spices, a liquid oil rich in polyunsaturated fatty acids, and a liquid-oil solidifying agent;
a step of subjecting the mixture to a rolling processing;
a step of subjecting the rolling-processed mixture to conching; and
a step of filling the conched mixture into a mold.
